Europäisches Patentamt

European Patent Office

Office européen des brevets

(19)

(11) Veröffentlichungsnummer : **0 162 420**
**B1**

(12)

# EUROPÄISCHE PATENTSCHRIFT

(45) Veröffentlichungstag der Patentschrift :
**17.08.88**

(51) Int. Cl.⁴ : **H 04 N 1/04**

(21) Anmeldenummer : **85106033.5**

(22) Anmeldetag : **17.05.85**

(54) Verfahren zum Abtasten eines Bildes.

(30) Priorität : **22.05.84 JP 101884/84**

(43) Veröffentlichungstag der Anmeldung :
**27.11.85 Patentblatt 85/48**

(45) Bekanntmachung des Hinweises auf die Patenterteilung : **17.08.88 Patentblatt 88/33**

(84) Benannte Vertragsstaaten :
**DE FR GB IT**

(56) Entgegenhaltungen :
**EP-A- 0 101 520**
**PATENT ABSTRACTS OF JAPAN, Band 6, Nr. 226, 11. November 1982, Seite(E-141)(1104); & JP-A-57-129067 (MATSUSHITA) 10-08-1982**

(73) Patentinhaber : **International Business Machines Corporation**
**Old Orchard Road**
**Armonk, N.Y. 10504 (US)**

(72) Erfinder : **Satoh, Junichi**
**B-17-21, 247-2, Tsutsumi**
**Chigasaki-shi Kanagawa-ken (JP)**

(74) Vertreter : **Kirchhof, Norbert, Ing. grad.**
**Schönaicher Strasse 220**
**D-7030 Böblingen (DE)**

EP 0 162 420 B1

## Beschreibung

Die Erfindung bezieht sich auf ein Verfahren zum Abtasten eines Bildes mittels einer Relativbewegung zwischen dem das Bild tragenden Dokument und einer Abtastvorrichtung, die das Dokument in einer Hauptabtastrichtung abtastet.

Wenn das Bild eines Dokumentes in der Hauptabfühlrichtung mit einer Auflösung von 8 Bildelementen/mm und in der Unterabfühlrichtung mit 8 Bildelementzeilen/mm abgefühlt wird, ist eine Pufferspeicherkapazität von ungefähr 512 K Bytes für das Speichern einer vollen Bildseite von DIN A4 Größe erforderlich. Auch der Sicht der Kostenminderung ist ein kleinerer Speicher, etwa von der Größe von 128 K Bytes, 256 K Bytes gewünscht. Zur Anpassung an einen kleineren Speicher wird das Dokument intermittierend abgefühlt. Wenn ein 256 K Bytes Speicher verwendet wird, wird nach dem Abfühlen der oberen Hälfte des Dokumentes der Abfühlvorgang kurzzeitig unterbrochen, und das Abfühlen der unteren Hälfte beginnt zu einer Zeit, während der die Daten der oberen Hälfte aus dem Speicher in die nächste Verarbeitungsstation übertragen werden. Es ist erforderlich, eine Kontinuität zwischen dem Bild auf der letzten Bildelementzeile der oberen Hälfte und der ersten Bildelementzeile in der unteren Hälfte zu erzielen. Eine präzise Steuerung zur Erzielung dieser Kontinuität wurde bisher durch den Stand der Technik mit geringen Kosten nicht realisiert, insbesondere wenn ein mit großer Masse behafteter Gegenstand, wie ein Flachbetabfühler über das Dokument bewegt wird. Für eine derartige Kontinuität schlägt die japanische Patentanmeldung 57-129 067 einen Rückwärtstransport der Abfühleinheit von der letzten Bildelementzeile einer Teilfläche auf dem Dokument zu einer vorherbestimmten Position und ein Wiederstarten der Abfühleinheit von der vorherbestimmten Position zum Abfühlen der nächsten Teilfläche vor, wenn der Speicher verfügbar wird. Während der Bewegung über die Entfernung zwischen der vorherbestimmten Position und der letzten Bildelementzeile der ersten Fläche wird das Abfühlen unterdrückt, und die Abfühleinheit wird auf die gewünschte Abfühlgeschwindigkeit beschleunigt, um die zweite Fläche abzufühlen. Wenn die Abfühleinheit die erste Bildelementzeile der zweiten Fläche des Dokumentes erreicht hat, wird das Abfühlen gestartet, um das Bild der zweiten Fläche einzubringen.

Wie oben beschrieben, ist die zusätzliche Hin- und Herbewegung der Abfühleinheit für ein präzises Einbringen des Bildes der letzten Bildelementzeile der ersten Fläche auf dem Dokument und der ersten Bildelementzeile auf der zweiten Fläche des Dokumentes erforderlich, um eine Kontinuität zwischen dem ersten und zweiten Bild zu erreichen.

Hier will die Erfindung Abhilfe schaffen. Die Erfindung, wie sie im Anspruch gekennzeichnet ist, löst die Aufgabe, ein präzises Bild des Dokumentes ohne eine derartige zusätzliche Bewegung zu erzeugen.

Die durch die Erfindung erreichten Vorteile sind im wesentlichen darin zu sehen, daß ein präzises Bild sogar dann erzeugt wird, wenn die Geschwindigkeit der Relativbewegung von Dokument und Abfühlsystem variiert, und daß ein Pufferspeicher verwendbar ist, dessen Speicherkapazität kleiner ist als die Gesamtanzahl von Bildelementen auf dem Dokument.

Im folgenden wird die Erfindung anhand eines in den Figuren veranschaulichten Ausführungsbeispieles beschrieben. Es zeigen :

Figur 1  einen Flachtischabfühler, bei dem das gegenüber der Hauptabfühlrichtung geneigte Streifenmuster an der Kante des Dokumenttisches entlang der Unterabfühlrichtung angeordnet ist,

Figur 2  einen Dokumententransport durch eine Abfühlvorrichtung, bei der das geneigte Streifenmuster auf dem Umfang einer Transportrolle vorgesehen ist,

Figur 3  eine auf dem Dokument manuell bewegbare Handabfühlvorrichtung, bei der das geneigte Streifenmuster auf einer Walze vorgesehen ist,

Figur 4  eine Teildraufsicht auf den Dokumententisch mit dem in Fig. 1 gezeigten geneigten Streifenmuster,

Figur 5  ein Blockdiagramm eines die Erfindung enthaltenden Bildabfühlsystems,

Figur 6A und 6B  eine Bewegung des Streifenmusters in der Hauptabfühlrichtung auf dem Dokument und das Ausgangssignal einer Ladungskupplungsvorrichtung zum Zwecke der Erklärung des erfindungsgemäßen Prinzips zum präzisen Erzeugen der Relativbewegung bei einer veränderlichen Geschwindigkeit des Dokumentes gegenüber der Ladungskupplungsvorrichtung,

Figur 7  ein Flußdiagramm zur Erklärung der Wirkungsweise der Erfindung,

Figur 8  ein Flußdiagramm zur Erklärung der Steuerung der Geschwindigkeit der Relativbewegung von Streifenmuster und Ladungskupplungsvorrichtung,

Figur 9  ein Blockschaltbild einer in Fig. 5 gezeigten Streifenauswertschaltung und

Figur 10  Impulsdiagramme zur Erklärung der Wirkungsweise der Streifenauswertschaltung gemäß Fig. 9.

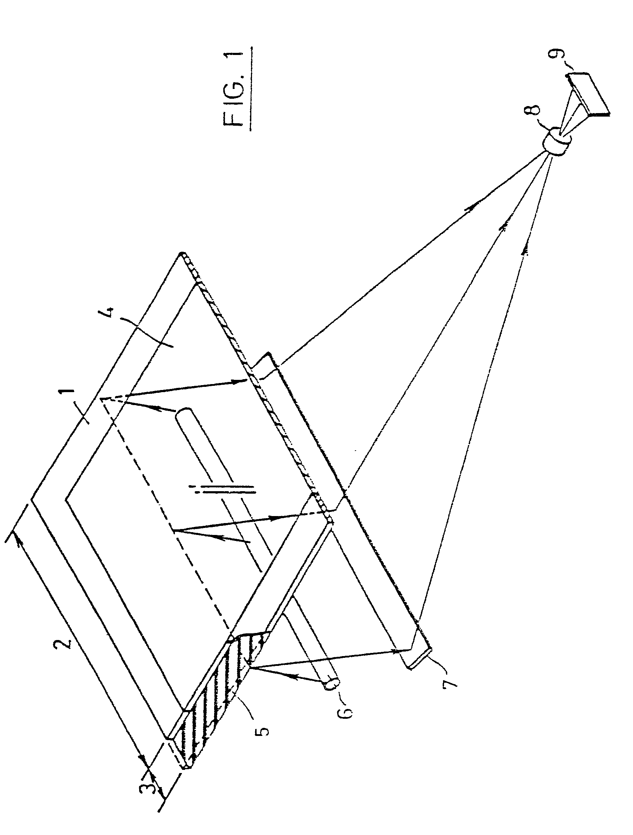

Der in Fig. 1 gezeigte Dokumententisch 1 wird gegenüber einem festen Abfühlsystem hin- und herbewegt. Der Dokumententisch 1 besitzt die Dokumentenfläche 2, die eine Glasplatte darstellt und eine Musterfläche 3. Das Dokument 4 ist mit seiner der Glasplatte zugewandten Bildfläche auf der Dokumentenfläche 2 aufgelegt. Das Streifenmuster 5 ist auf die Musterfläche 3 der unteren Fläche des Tisches 1 aufgedruckt. Das fest angeordnete Abfühlsystem enthält die Lampe 6, den Spiegel 7, das Objektiv 8 und die Ladungskupplungsvorrichtung 9. Das Licht von der Lampe 6 wird von dem Streifenmuster 5 und dem Bild des Dokumentes 4 reflektiert. Das das Bild auf dem Dokument 4 und das Streifenmuster 5 darstellende reflektierende Licht wird in die Ladungskupplungsvorrichtung 9 über den Spiegel 7 und das Objektiv 8 projiziert.

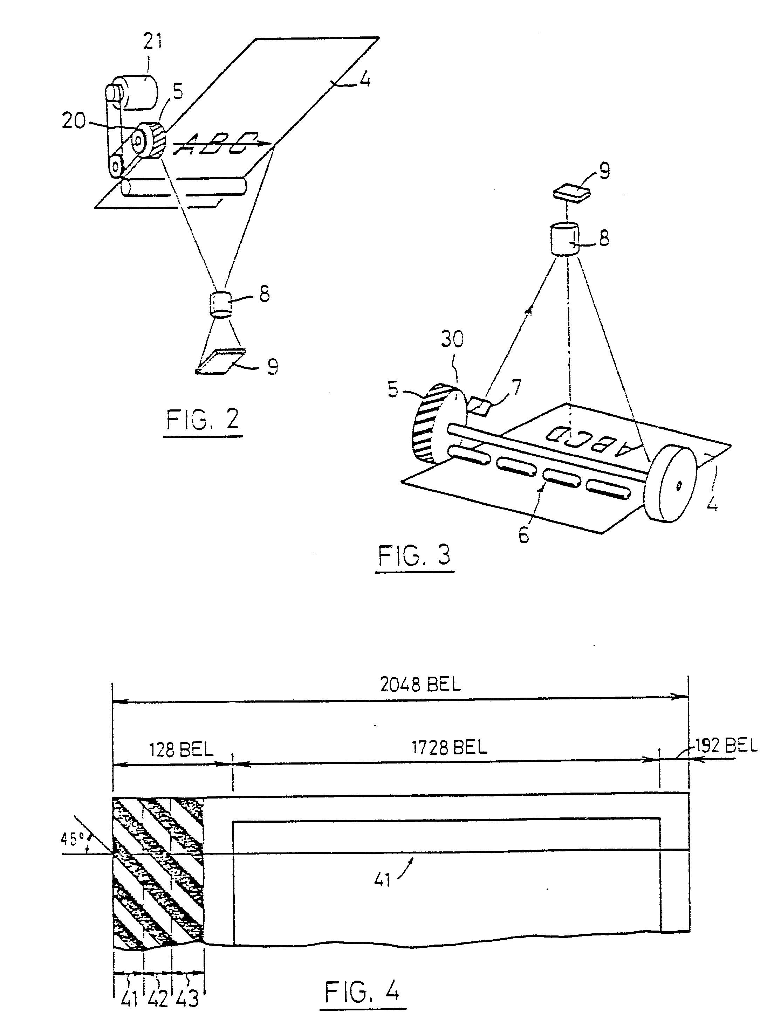

Fig. 2 zeigt den Dokumententransport durch das Abfühlsystem, bei dem das geneigte Streifenmuster 5 auf dem Umfang der Walze 20 angeordnet ist, die in Synchronismus mit der Transportrolle für das Dokument bewegt wird. Die Walze 20 wird durch den Elektromotor 21 angetrieben, so daß das Streifenmuster 5 in Synchronismus mit dem Dokument 4 bewegt wird.

In Fig. 3 ist ein mit einem Handrasenmäher vergleichbarer Handabfühler dargestellt, der ebenfalls die Lampe 6, den Spiegel 7, das Objektiv 8 und die Ladungskupplungsvorrichtung 9 aufweist. Das Streifenmuster 5 ist am Umfang der Rolle 30 angeordnet.

Die Ladungskupplungsvorrichtung 9 besitzt 2 048 kleine, auf einer Zeile angeordnete Ladungskupplungselemente. 128 dieser Elemente (Fig. 4) dienen zum Einfangen des vom Streifenmuster auf dem Dokumententisch 1 reflektierten Lichtes. 1 728 Elemente dienen zum Einfangen des vom eine Breite von 216 mm aufweisenden Dokument reflektierten Lichtes. Die restlichen 192 Elemente sind der rechten Randfläche des Dokumententisches 1 zugeordnet. Das Streifenmuster 5 ist unter 45° zur Hauptabfühlrichtung 41, d. h. zu den 2 048 Elementen der Ladungskupplungsvorrichtung 9 geneigt.

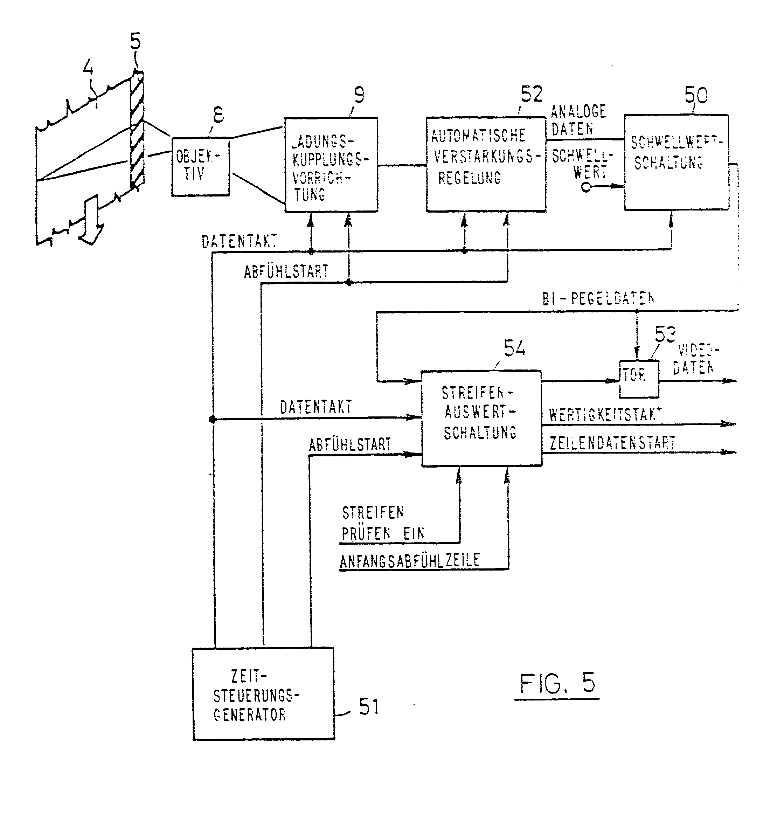

Im Blockschaltbild des Bildabfühlsystemes (Fig. 5) ist die Erfindung enthalten. Die Impulse sind in einer Negativlogik aktiv. Das vom Bild des Dokumentes 4 reflektierte, die Glasplatte und das unter 45° geneigte Streifenmuster passierende Licht wird mittels des Objektives 8 auf die 2 048 Elemente der Ladungskupplungsvorrichtung 9 projiziert. Der Zeitsteuerungsgenerator 51 erzeugt Taktimpulse und das Abfühlstartsignal. Die der Ladungskupplungsvorrichtung 9 zugeführten Datentaktimpulse steuern den die aufeinanderfolgenden Daten prüfenden Vorgang vom # 0-Element bis zum # 2 047-Element. Der automatischen Verstärkungsregelung 52 werden die aufeinanderfolgenden Analogdatensignale der Ladungskupplungsvorrichtung 9 zugeführt. Die verstärkten Analogdatensignale werden aufeinanderfolgend an die Schwellwertschaltung 50 weitergeleitet. Diese Schaltung 50 enthält eine Vergleichsschaltung, deren eine Eingangsklemme die Analogdatensignale und deren andere Eingangsklemme den Schwellwertpegel empfängt. Wenn die Analogdatensignale den Schwellwertpegel überschreiten, erzeugt die Schwellwertschaltung 50 weiße Signale «0» an ihrem Ausgang, und wenn die Analogdatensignale kleiner als der Schwellwertpegel sind, erzeugt die Schwellwertschaltung «1»-Signale an ihrem Ausgang, wodurch die Analogdatensignale von # 0 bis # 2 047 der Ladungskupplungselemente, d. h. die Bildelemente # 0 bis # 2 047 in zwei Pegeldaten, d. h. «1» oder «0» umgewandelt werden.

Das Ausgangssignal der Schwellwertschaltung 50 wird der Torschaltung 53 zugeführt. Die Torschaltung 53 steuert auf einer Videodatenzeile die Daten der Bildelemente 128 bis 2 047 des Dokumentes und der rechten Randfläche als Antwort auf Wertigkeits-Videodatenzeilensignale der Streifenauswertschaltung 54. Eine Steuervorrichtung, z. B. ein Mikroprozessor, liefert der Streifenauswertschaltung 54 ein Streifenprüf-Einsignal und ein Anfangsabfühl-Zeilensignal. Das Streifenprüf-Einsignal zeigt an, ob die Streifenauswertschaltung 54 arbeitet. Das Anfangsabfühl-Zeilensignal wird erzeugt, wenn die Führungskante des Dokumentes festgestellt wird, wie weiter unten beschrieben ist. Die Streifenauswertschaltung 54 analysiert die Bildelementdaten von # 0 bis # 127, um zu bestimmen, ob der Dokumententisch 1 und das Dokument 4 sich gegenüber dem Abfühlsystem um eine vorherbestimmte Entfernung bewegt haben.

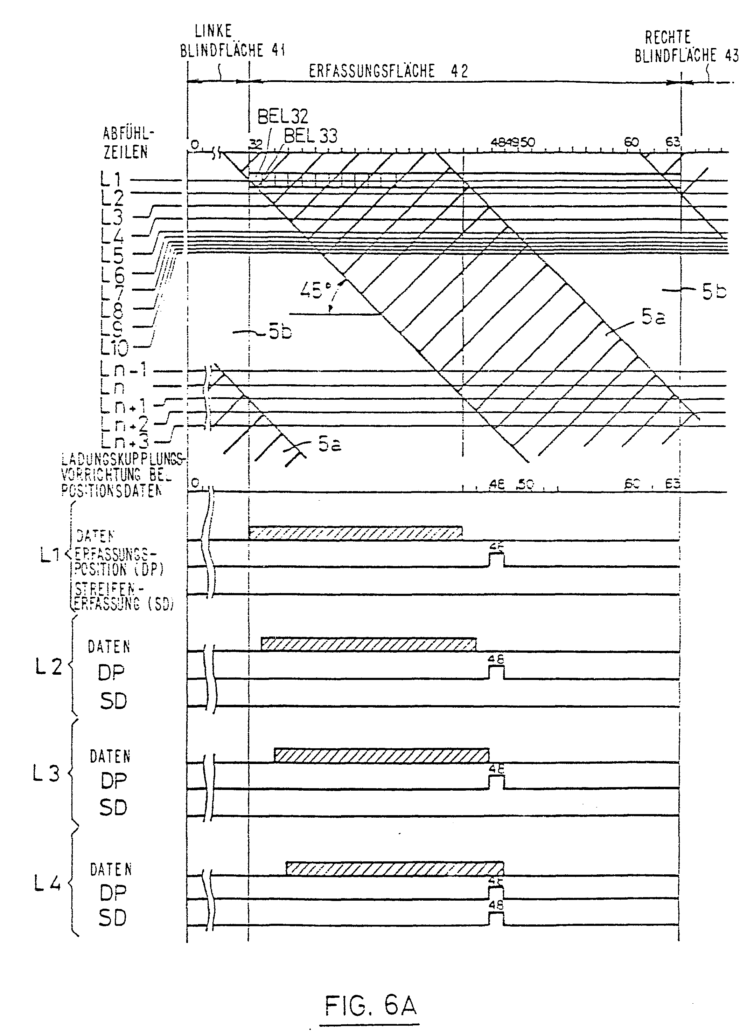

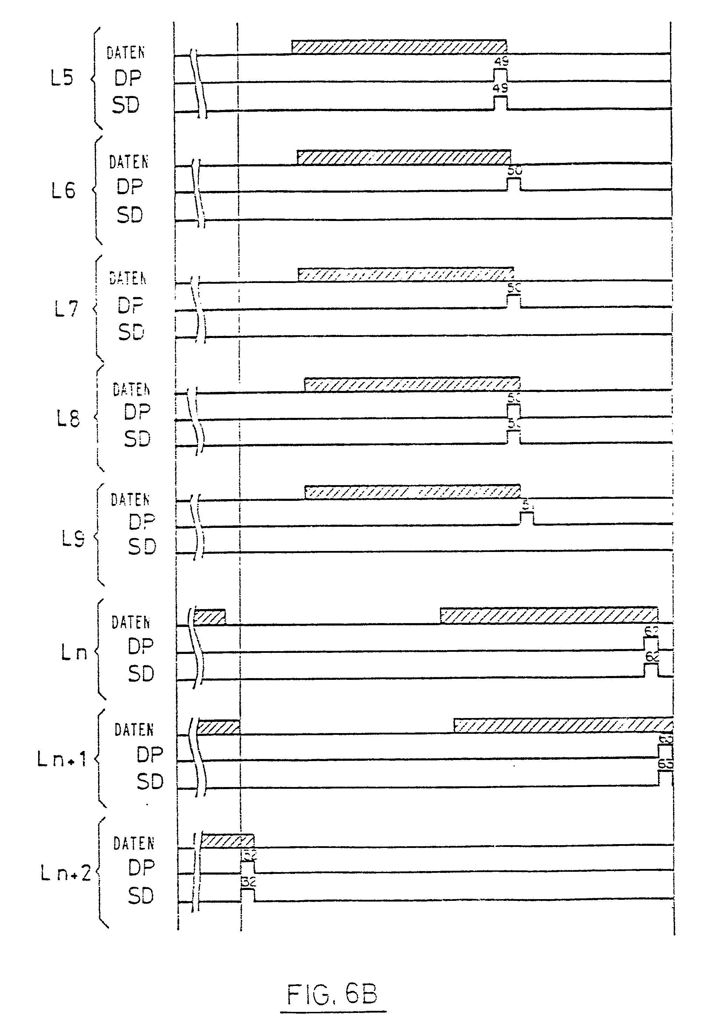

Einzelheiten des Streifenmusters und des Auswertvorganges der Schaltung 54 sind in den Fig. 6A und 6B dargestellt. Das Streifenmuster 5 enthält schwarze Streifen 5a und weiße Streifen 5b. Die Grenze zwischen den schwarzen und den weißen Streifen ist unter 45° gegenüber der Hauptabfühlrichtung, d. h. den 2 048 Ladungskupplungselementen, geneigt. Wie in den Fig. 4 und 6A gezeigt ist, besitzt das Streifenmuster die linke Blindfläche 41, die Erfassungsfläche 42 und die rechte Blindfläche 43. Es wird angenommen, daß die Auflösung in der Hauptabfühlrichtung 8 Bildelemente/mm, und in der Unterabfühlrichtung 8 Bildelementzeilen/mm, d. h. 8 Abfühlzeilen/mm beträgt. Die Abfühlzeilen L1 — Ln + 2 zeigen die Bewegung infolge der Relativbewegung des Dokumententisches und des Abfühlsystemes aus der Sicht der 2 048 Elemente der Ladungskupplungsvorrichtung 9. Jedes dieser Elemente stellt ein Bildelement dar, wie das Bildelement 32 und das Bildelement 33. Jedes Bildelement hat eine Größe von $1/8 \times 1/8$ mm.

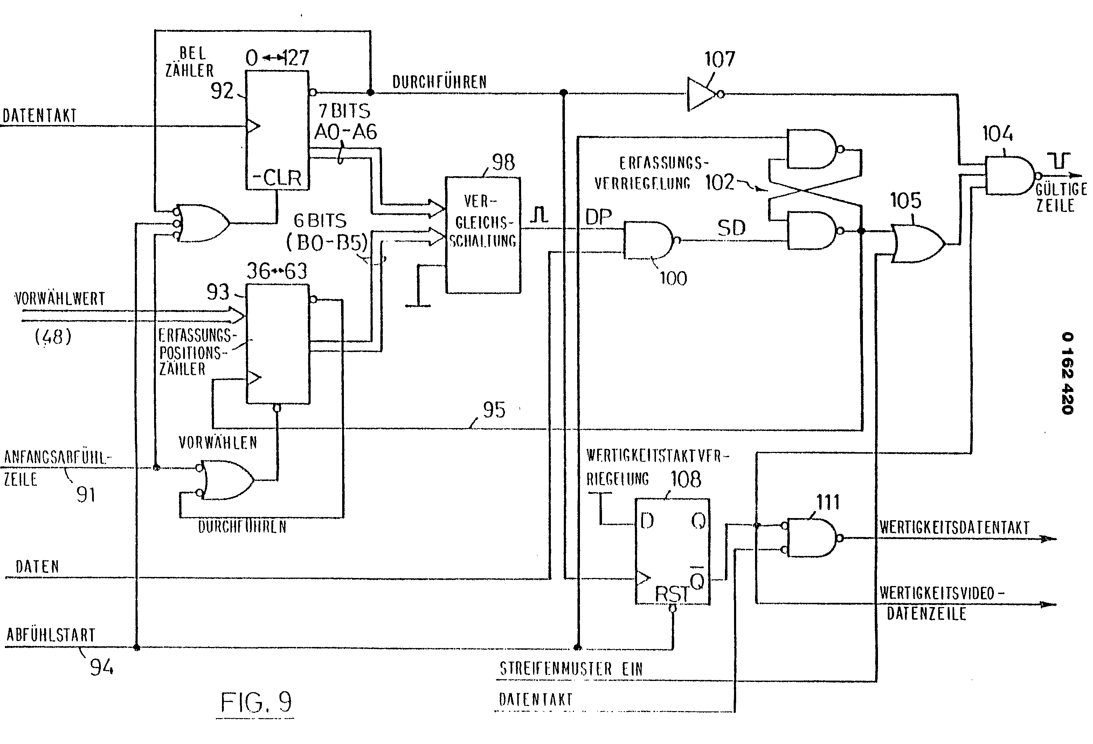

Das Prüfen der 2 048 Ladungskupplungselemente wird unter den Abfühlstartimpulsen (Fig. 9) periodisch wiederholt. Wenn die Transportgeschwindigkeit des Dokumententisches 1 auf der Nenn-Transportgeschwindigkeit gehalten wird, die mit der Prüfperiode der Ladungskupplungsvorrichtung 9 synchronisiert ist, werden die Bildelementzeilen oder die Abfühlzeilen regelmäßig alle 1/8 mm wiederholt, wie durch die Abfühlzeilen L1 — L5 und Ln — 1 bis Ln + 2 in Fig. 6A gezeigt ist. Die Zeilen L1 bis Ln + 2 zeigen die Mitte jeder der Bildelementzeilen. Wenn die Transportgeschwindigkeit langsamer als die Nenn-Transportgeschwindigkeit wird, werden die Bildelementzeilen einander überlappend erzeugt, wie durch die Zeilen L6 — L10 gezeigt ist. Die Abfühlzeile L8 unter den Zeilen L6 bis L10 hat 1/8 mm Abstand von der Abfühlzeile L5. Wenn es erwünscht ist, die Zeile L8 aufzugreifen als die nächste Datenzeile nach der Zeile L5, werden die Zeilen L6 und L7 und L9 und L10 ignoriert.

Um alle 1/8 mm Abfühlzeilen aufgreifen zu können, ist das Streifenmuster 5 gegenüber der Hauptabfühlrichtung unter 45° geneigt und wird von der Streifenauswertschaltung 54 eine Erfassungsposition DP (oder Erfassungsfenster) erzeugt, das bestimmt, ob zwischen den Abfühlzeilen ein Abstand von 1/8 mm erreicht ist, während der Relativbewegung des Dokumententisches und des Abfühlsystemes.

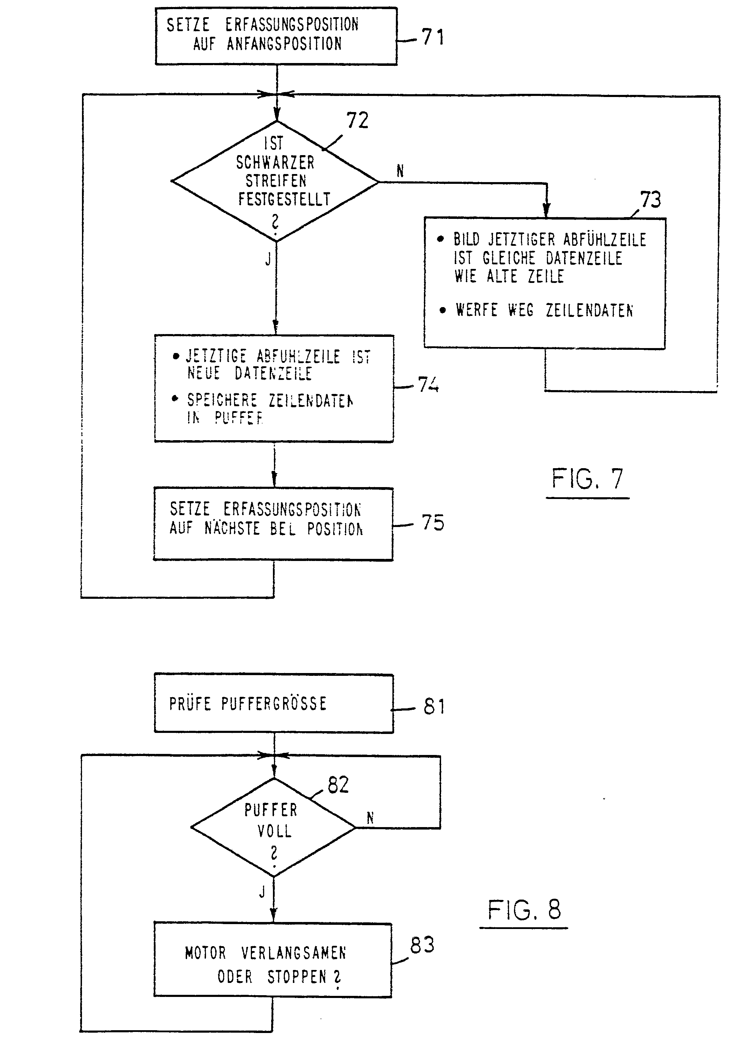

Die Erfassungsposition ist definiert als ein Erfassungsfenster von der Größe eines Bildelementes. Die Anfangsposition der Erfassungsposition (DP) kann irgendeine Bildelementposition in der Erfassungsfläche darstellen. Es wird angenommen, daß die Anfangsposition des Erfassungsfensters an die Bildelementposition 48 gesetzt wird. Dieser Setzschritt ist in Fig. 7 durch Block 71 dargestellt. Mit dem nächsten Schritt ist zu bestimmen, ob das schwarze Bildelement oder der schwarze Streifen in der Erfassungsposition vorgefunden wurde (Block 72, Fig. 7). Die Abfühlzeilen L1, L2 und L3 (Fig. 6A) haben kein schwarzes Bildelement in der Erfassungsposition der Bildelementposition 48. Block 72 (Fig. 7) erzeugt einen negativen (Nein)-Ausgang, und die Bilddaten des Dokumentes auf den Abfühlzeilen L1, L2 und L3 werden ignoriert, so daß die Bilddaten auf diesen Abfühlzeilen dem Pufferspeicher der Bildverarbeitungseinheit nicht zugeführt werden (Block 73, Fig. 7). Die die Blöcke 72 und 73 enthaltende geschlossene Schleife wird dreimal wiederholt. An der Abfühlzeile L4 findet die Erfassungsposition das schwarze Bildelement oder den schwarzen Streifen, d. h. die Bildelementposition 48 besitzt das schwarze Bildelement, und ein Streifenerfassungsimpuls (SD) wird erzeugt. Dieser Zustand wird durch ein Ja am Ausgang des Blockes 72 dargestellt. Im Block 74 wird die jetzige Abfühlzeile, d. h. die Abfühlzeile L4, als neue Abfühlzeile behandelt, und die Bilddaten auf dieser Abfühlzeile werden dem Pufferspeicher der Bildverarbeitungsschaltung zugeführt. Das Aufgreifen der Bilddaten wird durch die Wertigkeits-Videodatenzeilenimpulse (VVDL), wie später beschrieben ist, gesteuert. Die Erfassung der schwarzen Streifen in der Erfassungsposition verschieben die Erfassungsposition in die nächste rechte Bildelementposition, d. h. in die Bildelementposition 49, wie für die Zeile L5 in Fig. 6A und durch Block 75 in Fig. 7 gezeigt ist. Der Vorgang kehrt zu Block 72 zurück, durch den bestimmt wird, ob der schwarze Streifen auf den Abfühlzeile L5 in der Erfassungsposition, d. h. in der Bildelementposition 49 gefunden ist. Da die Antwort ein Ja ist, wird der Streifenerfassungsimpuls (SD) erzeugt, und die Bilddaten des Dokumentes auf der Abfühlzeile L5 werden dem Pufferspeicher zugeführt, und außerdem wird die Erfassungsposition in die nächste rechte Bildelementposition 50 verschoben, wie durch die Erfassungsposition für die Zeile L5 gezeigt ist. Der Vorgang kehrt zu Block 72 zurück, um zu bestimmen, ob der schwarze Streifen auf der Abfühlzeile L5 in der neuen Erfassungsposition gefunden ist, d. h. in der Bildelementposition 50. Der Zwischenraum zwischen den Zeilen L5 und L6 ist schmäler als der Nenn-Abstand von 1/8 mm infolge der Abnahme der Geschwindigkeit der Relativbewegung von Dokumententisch und Abfühlsystem, und der rechte Rand des schwarzen Streifens hat das rechte Ende der Bildelementposition 50 nicht erreicht, was bedeutet, daß der Zustand, daß der schwarze Streifen in der Erfassungsposition gefunden wurde, nicht erfüllt ist. Demzufolge wird der Wertigkeitszeilenimpuls nicht erzeugt, so daß die Bilddaten des Dokumentes auf dieser Erfassungszeile L6 nicht in den Pufferspeicher gelangen, wie durch die die Blöcke 72 und 73 enthaltende Schleife angezeigt ist. Da der Streifenerfassungsimpuls nicht erzeugt ist für die Abfühlzeile L6, wird die Erfassungsposition nicht in die nächste rechte Bildelementposition verschoben, und die Betriebsweise des Blockes 72 wird für die nächste Abfühlzeile L7 eingeleitet. Die Abfühlzeile L7 ist ebenfalls nicht um 1/8 mm von der Abfühlzeile L5 verschoben worden, und der schwarze Streifen hat das rechte Ende der Erfassungsposition, d. h. der Bildelementposition 50, nicht erreicht, so daß der Streifenerfassungsimpuls (SD) nicht erzeugt wird und die Bilddaten des Dokumentes auf der Abfühlzeile L7 nicht in den Pufferspeicher gelangen und ein Verschieben der Erfassungsposition in die nächste rechte Bildelementposition 51 nicht erfolgt. Für die Abfühlzeile L8 wird der schwarze Streifen außerhalb der Erfassungsposition, d. h. der Bildelementposition 50, gefunden, wodurch der Streifenerfassungsimpuls (SD) erzeugt wird und die Bilddaten des Dokumentes auf dieser Abfühlzeile L8 in den Pufferspeicher gelangen und die Erfassungsposition in die nächste rechte Bildelementposition 51 verschoben wird.

Es ist klar, daß die Bilddaten auf dem Dokument auf den Abfühlzeilen L6 und L7 nicht in den Pufferspeicher der Bildverarbeitungsschaltung gelangen. Das erfindungsgemäße Verfahren verfolgt den Wechsel der Geschwindigkeit der Relativbewegung des Dokumententisches und des Abfühlsystemes und steuert präzise das Hindurchlassen von Bilddaten des Dokumentes auf den Abfühlzeilen mit einem Abstand von der Größe des Nenn-Abstandes von 1/8 mm in den Pufferspeicher der Bildverarbeitungsschaltung. Die Erfassungposition wird fortschreitend in der Rechtsrichtung verschoben, und wenn die äußerste rechte Bildelementposition der Erfassungsfläche 42, d. h. die Bildelementposition 63, erreicht ist, kehrt die Erfassungsposition in die äußerste linke Bildelementposition, d. h. in die Bildelementposition 32 der Erfassungsfläche 42 zurück. Dieser Vorgang ist dargestellt durch die Impulse DP der Abfühlzeilen Ln, Ln + 1 und Ln + 2 in Fig. 6B.

Fig. 8 zeigt, daß die Geschwindigkeit der Relativbewegung von Dokumententisch und der Ladungskupplungseinheit variabel gesteuert wird in Abhängigkeit von der Größe oder Kapazität der offenen Fläche oder nicht gefüllten Fläche des Pufferspeichers der Bildverarbeitungsschaltung. Es können Pufferspeicher kleiner Kapazität wie 128 K Bytes Speicher verwendet werden zur Verarbeitung einer vollen Datenseite von 512 K Bytes. Die Geschwindigkeit des Antriebsmotors des bewegten Dokumententisches nimmt ab, wenn der Pufferspeicher gefüllt ist. Andererseits nimmt seine Geschwindigkeit zu, um die Nenn-Geschwindigkeit der Relativbewegung zu erreichen, wenn eine große Öffnungsfläche im Pufferspeicher erfaßt wird. Die Motorsteuerroutine enthält die Blöcke 81, 82, 83 (Fig. 8).

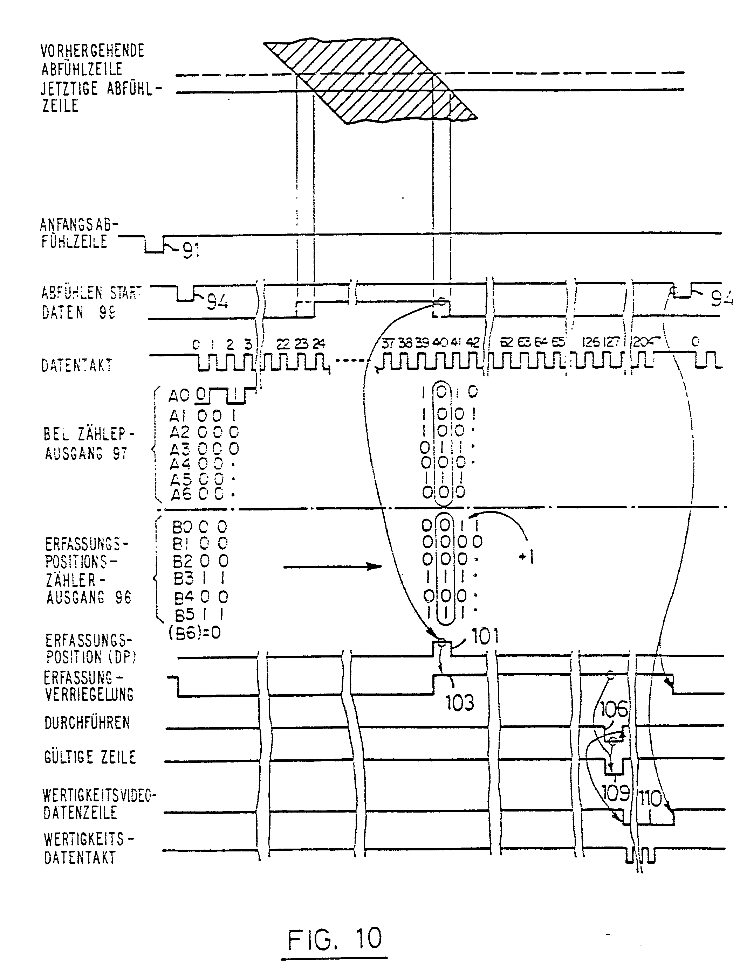

Fig. 9 zeigt die Streifenauswertschaltung 54 detailliert. In Fig. 10 sind Impulsdiagramme der Impulse dargestellt, die der Schaltung 54 zugeführt bzw. von derselben erzeugt werden.

Bei der Erfassung der Führungskante des Dokumentes 1 durch die Steuereinheit (nicht gezeigt) erzeugt dieselbe einen Anfangsabfühlzeilenimpuls (ISL), um den Bildelementzähler 92 und den Erfassungspositionszähler 93 zurückzustellen. Dann erzeugt der Zeitsteuerungsgenerator 51 (Fig. 5) periodisch Abfühlstartimpulse 94. Jeder Abfühlstartimpuls 94 löst einen Satz von Datentaktimpulsen 0 durch 2047 aus, die der Ladungskupplungsvorrichtung 9 zugeführt werden für ein aufeinanderfolgendes Prüfen ihrer Elemente # 0 bis 2047. Der Erfassungspositionszähler 93 bestimmt die Position der Erfassungsposition. Der Anfangswert 48 wird in den Zähler 93 eingegeben. Es ist zu betonen, daß irgendeine Bildelementposition in der Erfassungsfläche als Ausgangswert für die Erfassungsposition ausgewählt werden kann. Der Wert 48 entspricht der Anfangsbildelementposition des Erfassungsfensters (Fig. 6A).

Der Erfassungspositionszähler 93 rotiert zyklisch durch die Werte 32 bis 63 in Übereinstimmung mit den Impulsen auf einer Leitung 95 und erzeugt ein Bitmuster 96, d. h. Bits B0 bis B5 (Fig. 10), das die Erfassungsposition verkörpert. Der Bildelementzähler 92 (Fig. 9) erzeugt ein Bitmuster 97, d. h. Bits A0 bis A6 (Fig. 10) in Übereinstimmung mit dem Datentakt. Zum Beispiel erzeugt der Bildelementzähler 92 das Bitmuster 0000011 in Übereinstimmung mit dem dritten Datentakt im Datentaktimpulszug. Beide Bitmuster des Bildelementzählers 92 und des Erfassungspositionszählers 93 werden durch den Vergleicher 98 verglichen, der an seinem Ausgang einen Impuls erzeugt, wenn beide Bitmuster gleich sind. Der Vergleicher 98 erzeugt den Impuls 101, wenn die aufeinanderfolgend geprüften Bildelementpositionen oder die Ladungskupplungsvorrichtungselemente den Erfassungspunkt erreichen. Das Datensignal, d. h. « 1 » für den schwarzen Streifen und « 0 » für den weißen Streifen, der aufeinanderfolgend geprüften Bildelementposition wird der NAND-Schaltung 100 zugeführt. Wenn das schwarze Bildelement an der Erfassungsposition existiert, erzeugt die NAND-Schaltung 100 einen Impuls 103. Der letztere wird dem Erfassungspositionszähler 93 zugeführt, um den jetzigen Wert « 48 » zum nächsten Wert « 49 » zu verschieben. Dieser Vorgang geschieht für die Abfühlzeilen L4 und L5. Wenn beispielsweise der schwarze Streifen auf der Abfühlzeile L4 in der Erfassungsposition der Bildelementposition 48 auftritt, wird die Erfassungsposition in die nächste Bildelementposition 49 verschoben.

Der Erfassungsverriegelungsimpuls 103 des oberen Pegels wird der NAND-Schaltung 104 über die ODER-Schaltung 105 zugeführt, was der erste Eingang der NAND-Schaltung 104 ist.

Da die Datentakte dem Bildelementzähler 92 aufeinanderfolgend zugeführt werden, nähert sich der durch das Bitmuster A0 bis A6 dargestellte Zählwert aufeinanderfolgend dem Wert 127, der die rechte Kante der Musterfläche 3 (Fig. 4) darstellt. Wenn der Bildelementzähler 92 den Wert 127 erreicht, erzeugt der Zähler einen Durchführungsimpuls 106. Der letztere wird durch den Inverter 107 umgekehrt, und der umgekehrte Hochpegelimpuls wird der NAND-Schaltung 104 zugeführt, so daß der zweite Zustand der NAND-Schaltung erfüllt ist.

Der Durchführungsimpuls 106 wird auch der Wertigkeitstaktverriegelung 108 zugeführt. Diese Verriegelung 108 erzeugt den Niedrigpegelimpuls in Einklang mit der positiv werdenden Kante des Durchführungsimpulses 106. Bis zu dieser Kante wird der Ausgang der Wertigkeitstaktverriegelung 108 auf seinem oberen Pegel gehalten, welcher der NAND-Schaltung 104 zugeführt wird, so daß der dritte Zustand dieser Schaltung erfüllt ist. Das heißt, alle der ersten, zweiten und dritten Eingänge der NAND-Schaltung 104 sind die oberen Pegel am niederpegeligen Ausführungssignal, so daß die NAND-Schaltung 104 einen Wertigkeitszeilenimpuls 109 von niedrigem Pegel erzeugt, der anzeigt, daß die Bilddaten der Bildelementpositionen 127 bis 2047 dem Pufferspeicher der Bildverarbeitungsschaltung zugeführt werden sollten. Die negativ werdende Kante des Wertigkeits-Taktverriegelungsimpulses 110 wird auch der Negativlogik-UND-Schaltung 111 zugeführt und steuert die Datentakte 127 bis 2047, um die Bilddaten des Dokumentes zu überprüfen beim Auftreten von Datentakten am anderen Eingang dieser UND-Schaltung 111.

Die Streifenauswertschaltung 54 bestimmt für jede Abfühlzeile oder Bildelementzeile, ob die rechte Kante des schwarzen Streifens gefunden ist im Erfassungsfenster und daß bei der Erfassung des schwarzen Streifens die Bilddaten des Dokumentes auf der Abfühlzeile dem Pufferspeicher der Bildverarbeitungsschaltung zugeführt werden und die Abfühlposition in die nächste rechte Bildelementposition verschoben wird und daß ein Nichtauftreten des schwarzen Streifens die Bilddaten des Dokumentes auf der Abfühlzeile unterdrückt werden, so daß die Bilddaten dem genannten Pufferspeicher nicht zugeführt werden und auch die Erfassungsposition nicht verschoben wird.

## Patentanspruch

Verfahren zum Abtasten eines Bildes mittels einer Relativbewegung zwischen dem das Bild tragenden Dokument (4) und einer Abtastvorrichtung (8, 9), die das Dokument (4) in einer Hauptabtastrichtung (41) abtastet, dadurch gekennzeichnet, daß ein Streifenmuster (5) vorgesehen ist dessen Streifen schräg zur Hauptabtastrichtung (41) verlaufen und das zwischen diesem Streifenmuster (5) und der Abtastvorrichtung (8, 9) eine Relativbewegung stattfindet, daß die Größe der Bewegung des Streifenmusters (5) in der Hauptabtastrichtung (41) von der Abtastvorrichtung (8, 9) ermittelt wird und daß der Abtastvorgang in Abhängigkeit von der festgestellten Bewegungsgröße des Streifenmusters (5) gesteuert wird.

## Claim

Method of scanning an image by means of a relative movement between the document (4) carrying the image and a scanning device (8, 9) scanning the document (4) in a main scan direction (41), characterized in that a stripe pattern (5) is provided whose stripes are inclined relative to the main scan direction (41), and that between this stripe pattern (5) and the scanning device (8, 9) there is a relative movement, that the size of the movement of the stripe pattern (5) in the main scan direction (41) is detected by the scanning device (8, 9), and that the scanning process is controlled as a function of the detected size of the movement of the stripe pattern (5).

## Revendication

Procédé d'exploration d'une image au moyen d'un mouvement relatif entre le document (4) porteur de celle-ci et un dispositif (8, 9) propre à explorer ledit document (4) dans une direction de balayage principale (41) caractérisé par le fait que l'on utilise un motif (5) à raies dirigées obliquement par rapport à la direction de balayage principale (41), qu'un mouvement relatif s'exerce entre ledit motif à raies (5) et le dispositif explorateur, que ce dernier (8, 9) détermine l'amplitude dudit mouvement du motif à raies (5) dans la direction de balayage principale (41) et que l'on commande le processus d'exploration en fonction de l'amplitude constatée du mouvement du motif à raies (5).

FIG. 1

0 162 420

FIG. 2

FIG. 3

2048 BEL

128 BEL  1728 BEL  192 BEL

45°

41

41 42 43

FIG. 4

2

FIG. 5

FIG. 6A

4

FIG. 6B

```
┌────────────────────────────────┐
│  SETZE  ERFASSUNGSPOSITION      │──── 71
│    AUF  ANFANGSPOSITION         │
└────────────────────────────────┘
```

```
            72
         ╱      ╲
        ╱  IST    ╲
       ╱ SCHWARZER ╲        N
      ╱  STREIFEN    ╲──────────────┐
       ╲ FESTGESTELLT ╱             │
        ╲     ?      ╱              ▼
         ╲         ╱     ┌──────────────────────────────┐
             J            │ • BILD JETZTIGER ABFÜHLZEILE  │──── 73
                          │   IST GLEICHE DATENZEILE      │
                          │   WIE ALTE ZEILE             │
                          │                              │
                          │ • WERFE WEG ZEILENDATEN      │
                          └──────────────────────────────┘
```

```
┌────────────────────────────────┐
│ • JETZTIGE ABFÜHLZEILE IST      │
│   NEUE  DATENZEILE              │──── 74
│                                 │
│ • SPEICHERE ZEILENDATEN         │
│   IN  PUFFER                    │
└────────────────────────────────┘
```

```
┌────────────────────────────────┐
│  SETZE  ERFASSUNGSPOSITION      │──── 75
│  AUF  NÄCHSTE BEL POSITION      │
└────────────────────────────────┘
```

FIG. 7

```
┌────────────────────────────────┐
│     PRÜFE PUFFERGRÖSSE          │──── 81
└────────────────────────────────┘
```

```
            82
         ╱      ╲
        ╱ PUFFER ╲        N
       ╱   VOLL   ╲──────────┐
        ╲    ?    ╱
         ╲      ╱
             J
```

```
┌────────────────────────────────┐
│   MOTOR  VERLANGSAMEN           │──── 83
│     ODER  STOPPEN ?             │
└────────────────────────────────┘
```

FIG. 8

FIG. 9

FIG. 10